# FASCICULE DE BREVET EUROPEEN

(11) **EP 3 848 288 B1**
(45) Date de publication et mention de la délivrance du brevet: **14.06.2023**
(21) Numéro de dépôt: 21150166.3
(22) Date de dépôt: 05.01.2021
(51) Int. Cl.: B64D 27/26, B64C 3/32

(54) **ATTACHE ARRIERE ENTRE UN MAT D'ACCROCHAGE ET UNE AILE D'UN AERONEF**
HINTERE BEFESTIGUNG ZWISCHEN EINER AUFHÄNGESÄULE UND EINER TRAGFLÄCHE EINES FLUGZEUGS
REAR TIE BETWEEN A MOUNTING STRUT AND A WING OF AN AIRCRAFT

(30) Priorité: 07.01.2020 FR 2000095
(43) Date de publication de la demande: 14.07.2021
(73) Titulaire: Airbus Operations (S.A.S.), 31060 Toulouse Cedex 9 (FR)
(72) Inventeur: DUBOIS, Olivier, 31060 TOULOUSE (FR); BERJOT, Michael, 31060 TOULOUSE (FR); LABARTHE, Christophe, 31060 TOULOUSE (FR)
(74) Mandataire: Cabinet Le Guen Maillet

(56) Documents cités:
- SU-A1- 1 099 538
- US-A1- 2009 108 127

## Description

### DOMAINE TECHNIQUE

La présente invention concerne une attache arrière entre un mât d'accrochage et une aile d'un aéronef, ainsi qu'un aéronef comportant au moins une telle attache arrière.

### ETAT DE LA TECHNIQUE ANTERIEURE

Sur les aéronefs existants, les moteurs tels que les turboréacteurs sont suspendus en dessous de la voilure par des dispositifs d'accrochage complexes, également appelés « EMS » (de l'anglais « Engine Mounting Structure »), ou encore mâts d'accrochage. Les mâts d'accrochage habituellement employés présentent une structure primaire, également dite structure rigide, souvent réalisée sous forme d'un caisson, c'est-à-dire réalisée par l'assemblage de longerons inférieurs et supérieurs raccordés entre eux par une pluralité de nervures transversales de renfort situées à l'intérieur du caisson et à ses extrémités. Les longerons sont agencés en faces inférieure et supérieure, tandis que des panneaux latéraux ferment le caisson en faces latérales. De plus, le mât d'accrochage est agencé en partie supérieure du moteur, entre ce dernier et le caisson de voilure. Cette position horaire est dite « à 12h ».

De façon connue, la structure primaire de ces mâts est conçue pour permettre la transmission à la voilure des efforts statiques et dynamiques engendrés par les moteurs, tels que le poids, la poussée, ou encore les différents efforts dynamiques, notamment en cas d'atterrissage dynamique, etc.

Dans les mâts d'accrochage connus de l'état de la technique, la transmission des efforts entre sa structure primaire et le caisson de voilure est classiquement assurée par un jeu d'attaches comprenant une attache avant, une attache arrière, ainsi qu'une attache intermédiaire, cette dernière étant notamment destinée à reprendre les efforts de poussée générés par le moteur. Ces attaches sont classiquement interposées verticalement entre le caisson de voilure et la structure primaire du mât d'accrochage.

Sur les moteurs récents, le diamètre est de plus en plus élevé.

Par conséquent, avec une garde au sol qui est déterminée de manière à rester acceptable du point de vue sécuritaire, l'espace restant entre l'élément de voilure et le moteur s'avère de plus en plus restreint. De ce fait, il devient difficile d'implanter le mât d'accrochage ainsi que les différentes attaches voilure dans cet espace vertical restant, usuellement dédié à cette implantation. Cette difficulté est d'autant plus élevée que les efforts qui transitent sont également d'intensités élevées, et requièrent des dimensionnements appropriés pour le caisson de voilure et la structure primaire. En effet, ces derniers doivent présenter des dimensions suffisantes pour apporter une résistance mécanique capable de supporter le passage des efforts du moteur vers l'élément de voilure, avec une faible déformée sous contrainte dans le but de ne pas dégrader les performances aérodynamiques du système propulsif.

Dans l'état de la technique, de multiples solutions ont été proposées pour rapprocher le moteur au plus près de l'élément de voilure auquel il est suspendu, et ce dans le but de conserver la garde au sol requise.

Le document US 2009/108127 A1 divulgue un système pour fixer une jambe de force de moteur d'avion à une aile, comprenant une fixation avant, une fixation arrière et une fixation intermédiaire. Le document SU 1 099 538 A1 divulgue également un système de fixation d'une jambe de force de moteur d'avion à une aile.

Néanmoins, ces solutions doivent être améliorées en permanence pour s'adapter aux diamètres de soufflante toujours plus élevés, retenus pour satisfaire les besoins en taux de dilution.

### EXPOSE DE L'INVENTION

Un objet de la présente invention est de proposer une attache arrière entre un mât d'accrochage et une aile d'un aéronef, où ladite attache arrière présente un encombrement réduit et permet un gain de place en hauteur.

A cet effet, est proposée un assemblage pour un aéronef et comportant :
- un mât d'accrochage comportant une structure primaire avec une paroi de queue,
- une aile comportant un caisson de voilure avec une paroi inférieure, et
- une attache avant assurant la fixation de la structure primaire au caisson de voilure,
- une attache arrière pour un aéronef comportant une structure primaire d'un mât d'accrochage avec une paroi de queue, et un caisson de voilure d'une aile avec une paroi inférieure, ladite attache arrière comportant :
- une attache voilure qui comporte un plateau et une paroi principale perpendiculaire au plateau, où le plateau est destiné à être fixé à la paroi inférieure,
- une équerre avant et une équerre arrière, où chaque équerre comporte une paroi verticale et une paroi horizontale, où la paroi verticale de l'équerre avant s'applique contre une face avant de la paroi principale, et la paroi horizontale de l'équerre avant s'applique contre et sous le plateau, où la paroi verticale de l'équerre arrière s'applique contre une face arrière de la paroi principale, et la paroi horizontale de l'équerre arrière s'applique contre et sous le plateau, et
- un ensemble comportant un socle, un fût bâbord et un fût tribord qui sont fixés au socle, où le socle est destiné à être fixé à la paroi de queue, où pour chaque fût, chaque paroi verticale et la paroi principale présentent un alésage dans lequel s'emmanche ledit fût.

Une telle attache arrière permet un gain de place verticalement et permet ainsi de rapprocher le mât d'accrochage de l'aile.

Avantageusement, l'emmanchement de chaque fût dans les alésages associés s'effectue par l'intermédiaire d'une rotule.

Avantageusement, le fût bâbord est constitué d'un demi-cylindre bâbord et d'un demi-cylindre tribord, le fût tribord est constitué d'un demi-cylindre bâbord et d'un demi-cylindre tribord, et le socle est divisé en trois bases, où une base est solidaire du demi-cylindre bâbord du fût bâbord, où une base est solidaire du demi-cylindre tribord du fût tribord et où une base est solidaire du demi-cylindre tribord du fût bâbord et du demi-cylindre bâbord du fût tribord. L'invention propose également un aéronef comportant un assemblage selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] montre une vue de côté d'un aéronef comportant une attache arrière selon l'invention,
[Fig. 2] montre une vue en perspective d'une attache arrière selon l'invention, et
[Fig. 3] montre une vue éclatée et en perspective de l'attache arrière selon l'invention.

### EXPOSE DETAILLE DE MODES DE REALISATION

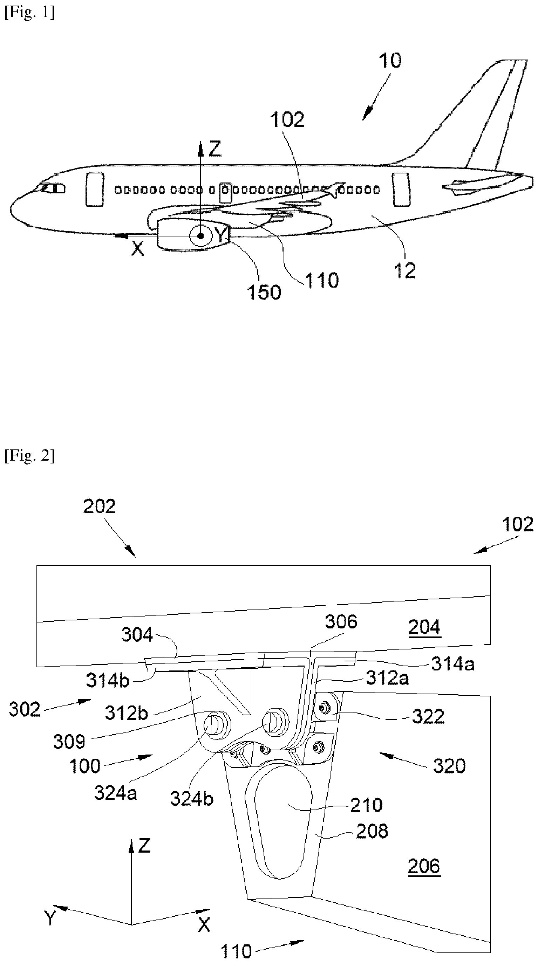

La Fig. 1 montre un aéronef 10 comprenant un fuselage 12 sur lequel sont fixées deux ailes 102 (une seule étant visible sur la Fig. 1).

Sous chaque aile 102 est fixé au moins un moteur 150 en particulier à double flux et à double corps, tel qu'un turboréacteur. La fixation de chaque moteur 150 à l'aile 102 s'effectue par l'intermédiaire d'un mât d'accrochage 110 agencé sous l'aile 102.

Dans toute la description qui va suivre, et par convention, la direction X correspond à la direction longitudinale du moteur 150, la direction Y correspond à la direction transversale du moteur 150 et la direction Z correspond à la direction verticale, ces trois directions X, Y et Z étant orthogonales entre elles.

Les termes « avant », « arrière », « bâbord » et « tribord » sont à considérer par rapport à une direction d'avancement de l'aéronef 10 rencontrée suite à la poussée exercée par les moteurs 150, cette direction étant orientée selon la direction longitudinale X.

La Fig. 2 montre le mât d'accrochage 110 et l'aile 102.

L'aile 102 présente une constitution classique et comporte un caisson de voilure 202 autour duquel est fixée une peau formant la surface aérodynamique de l'aile 102. Le caisson de voilure 202 est formé de longerons et de nervures de renfort fixées entre les longerons et logées à l'intérieur du caisson de voilure. En particulier, le caisson de voilure 202 comporte une paroi inférieure 204 qui s'étend dans un plan globalement horizontal et globalement parallèle au plan XY.

De la même manière, le mât d'accrochage 110 présente une constitution classique avec une structure primaire 206 qui constitue une structure rigide permettant la transmission au caisson de voilure 202 des efforts statiques et dynamiques engendrés par le moteur 150. La structure primaire 206 s'étend globalement selon la direction longitudinale X et elle est délimitée en particulier par une paroi de queue 208 qui ferme la structure primaire 206 à l'arrière et qui s'étend dans un plan perpendiculaire à la direction longitudinale X, c'est-à-dire parallèle au plan YZ.

La fixation du moteur 150 sur le caisson primaire 206 s'effectue d'une manière conventionnelle, qui ne sera pas détaillée dans le cadre de cette invention. Elle est réalisée par des attaches moteur classiques, connues de l'homme du métier.

De la même manière, la fixation de la structure primaire 206 au caisson de voilure 202 s'effectue par des attaches avant qui ne seront pas détaillées dans le cadre de cette invention et qui prennent par exemple la forme de liaison par chape entre la structure primaire 206 et le caisson de voilure 202.

Entre la structure primaire 206 et le caisson de voilure 202 est également interposée une attache arrière 100 selon l'invention.

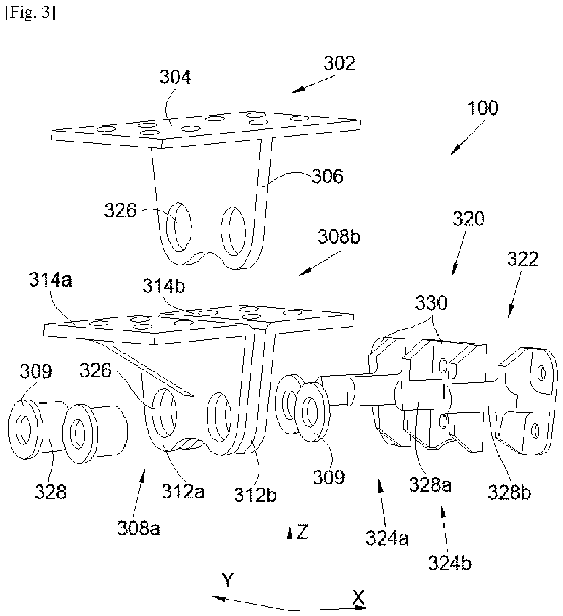

La Fig. 3 montre l'attache arrière 100 en vue éclatée.

L'attache arrière 100 comporte une attache voilure 302 qui comporte un plateau 304 et une paroi principale 306 perpendiculaire au plateau 304. Le plateau 304 est fixé à la paroi inférieure 204 et la paroi principale 306 s'étend vers le bas, c'est-à-dire vers la structure primaire 206. La fixation du plateau 304 à la paroi inférieure 204 s'effectue par exemple par des vis de fixation et à cette fin, le plateau 304 présente des alésages. La paroi principale 306 s'étend dans un plan perpendiculaire à la direction longitudinale X, c'est-à-dire parallèle à la paroi de queue 208 et présente une face avant orientée vers l'avant et une face arrière orientée vers l'arrière.

L'attache arrière 100 comporte une équerre avant 308a et une équerre arrière 308b.

Chaque équerre 308a-b comporte une paroi verticale 312a-b et une paroi horizontale 314a-b fixée perpendiculairement à la paroi verticale 312a-b correspondante.

La paroi verticale 312a de l'équerre avant 308a s'applique contre la face avant, et la paroi horizontale 314a de l'équerre avant 308a s'applique contre et sous le plateau 304. Afin de permettre la mise en place des vis de fixation du plateau 304, la paroi horizontale 314a de l'équerre avant 308a présente des alésages correspondant aux alésages du plateau 304.

La paroi verticale 312b de l'équerre arrière 308b s'applique contre la face arrière, et la paroi horizontale 314b de l'équerre arrière 308b s'applique contre et sous le plateau 304. Afin de permettre la mise en place des vis de fixation du plateau 304, la paroi horizontale 314b de l'équerre arrière 308b présente des alésages correspondant aux alésages du plateau 304.

Les vis de fixation prennent ainsi en sandwich une des parois horizontales 314a-b et le plateau 304 en se vissant dans la paroi inférieure 204.

La paroi principale 306 se positionne ainsi entre la paroi verticale 312a de l'équerre avant 308a et la paroi verticale 312b de l'équerre arrière 308b.

L'attache arrière 100 comporte un ensemble 320 comportant un socle 322 et deux fûts 324a-b fixés au socle 322, à savoir un fût bâbord 324a disposé à bâbord et un fût tribord 324b disposé à tribord. Les fûts 324a-b sont disposés de part et d'autre d'un plan de symétrie XZ de l'attache arrière 100.

Le socle 322 est fixé à la paroi de queue 208 par exemple par des vis de fixation et à cette fin, le socle 322 présente des alésages.

Chaque fût 324a-b s'étend parallèlement à la direction longitudinale X vers l'arrière par rapport à la paroi de queue 208.

Pour chaque fût 324a-b, chaque paroi verticale 312a-b et la paroi principale 306 présentent un alésage 326 dans lequel s'emmanche ledit fût 324a-b.

La mise en place d'un tel arrangement permet une réduction de l'encombrement de l'attache arrière 100 par rapport à l'état de la technique. En outre, un tel arrangement permet d'augmenter la hauteur de la paroi de queue 208 et ainsi d'y aménager un passage 210 pour le passage des systèmes électriques, hydrauliques de l'aéronef 10.

L'emmanchement de chaque fût 324a-b dans les alésages 326 associés s'effectue par l'intermédiaire d'une rotule 328 qui assure ainsi un libre débattement des fûts 324a-b par rapport aux alésages 326. Chaque rotule 328 est un élément connu de l'homme du métier et selon un mode de réalisation particulier, elle comporte une paroi cylindrique extérieure fixée dans les alésages 326, une paroi cylindrique intérieure dans laquelle s'emmanche le fût 324a-b, et un noyau cylindrique solidaire de la paroi cylindrique intérieure et monté dans un logement cylindrique de la paroi cylindrique extérieure.

Les parois verticales 312a-b et la paroi principale 306 sont maintenues les unes contre les autres. Dans le mode de réalisation de l'invention présenté sur les Figs. 2 et 3, chaque rotule 328 comporte à cet effet deux épaulements 309 et chaque épaulement 309 est en appui contre une face extérieure d'une paroi verticale 312a-b. La fixation de chaque épaulement 309 sur la rotule 328 est réalisée par exemple par vissage.

Chaque fût 324a-b permet une reprise du couple autour de la direction longitudinale X et des efforts en Y et Z.

Dans le mode de réalisation de l'invention présenté sur les Figs. 2 et 3, chaque fût 324a-b est constitué de deux demi-cylindres 328a-b appliqués l'un contre l'autre et présentant un plan de contact vertical, c'est-à-dire parallèle au plan XZ.

Le fût bâbord 324a est ainsi constitué d'un demi-cylindre bâbord 328a et d'un demi-cylindre tribord 328b et le fût tribord 324b est ainsi constitué d'un demi-cylindre bâbord 328a et d'un demi-cylindre tribord 328b.

De la même manière, le socle 322 est divisé en trois bases 330, à savoir une base 330 solidaire du demi-cylindre bâbord 328a du fût bâbord 324a, une base 330 solidaire du demi-cylindre tribord 328b du fût tribord 324b et une base 330 solidaire du demi-cylindre tribord 328b du fût bâbord 324a et du demi-cylindre bâbord 328a du fût tribord 324b.

Chaque base 330 est fixée à la paroi de queue 208.

Ce mode de réalisation particulier permet de réaliser un système de sécurité en attente (dit «fail-safe » en langue anglo-saxonne). Ainsi, en cas de défaillance de l'un des demi-cylindres ou de l'une des bases, les autres compensent la défaillance et transmettent les efforts subis.

## Revendications

1. Assemblage pour un aéronef (100) et comportant :
- un mât d'accrochage (110) comportant une structure primaire (206) avec une paroi de queue (208),
- une aile (102) comportant un caisson de voilure (202) avec une paroi inférieure (204), et
- une attache avant assurant la fixation de la structure primaire (206) au caisson de voilure (202),
- une attache arrière (100) comportant :
- une attache voilure (302) qui comporte un plateau (304) et une paroi principale (306) perpendiculaire au plateau (304), où le plateau (304) est fixé à la paroi inférieure (204),
- une équerre avant (308a) et une équerre arrière (308b), où chaque équerre (308a-b) comporte une paroi verticale (312a-b) et une paroi horizontale (314a-b), où la paroi verticale (312a) de l'équerre avant (308a) s'applique contre une face avant de la paroi principale (306), et la paroi horizontale (314a) de l'équerre avant (308a) s'applique contre et sous le plateau (304), où la paroi verticale (312b) de l'équerre arrière (308b) s'applique contre une face arrière de la paroi principale (306), et la paroi horizontale (314b) de l'équerre arrière (308b) s'applique contre et sous le plateau (304), et
- un ensemble (320) comportant un socle (322), un fût bâbord (324a) et un fût tribord (324b) qui sont fixés au socle (322), où le socle (322) est fixé à la paroi de queue (208), où pour chaque fût (324a-b), chaque paroi verticale (312a-b) et la paroi principale (306) présentent un alésage (326) dans lequel s'emmanche ledit fût (324a-b).

2. Assemblage selon la revendication 1, **caractérisé en ce que** l'emmanchement de chaque fût (324a-b) dans les alésages (326) associés s'effectue par l'intermédiaire d'une rotule (328).

3. Assemblage selon l'une des revendications 1 ou 2, **caractérisé en ce que** le fût bâbord (324a) est constitué d'un demi-cylindre bâbord (328a) et d'un demi-cylindre tribord (328b), **en ce que** le fût tribord (324b) est constitué d'un demi-cylindre bâbord (328a) et d'un demi-cylindre tribord (328b), et **en ce que** le socle (322) est divisé en trois bases (330), où une base (330) est solidaire du demi-cylindre bâbord (328a) du fût bâbord (324a), où une base (330) est solidaire du demi-cylindre tribord (328b) du fût tribord (324b) et où une base (330) est solidaire du demi-cylindre tribord (328b) du fût bâbord (324a) et du demi-cylindre bâbord (328a) du fût tribord (324b).

4. Aéronef (10) comportant un assemblage selon l'une des revendications 1-3.

## Patentansprüche

1. Anordnung für ein Luftfahrzeug (100), die Folgendes umfasst:
- eine Aufhängesäule (110), die eine Primärstruktur (206) mit einer Endwand (208) umfasst,
- eine Tragfläche (102), die einen Flügelkasten (202) mit einer unteren Wand (204) umfasst, und
- eine vordere Befestigung, die die Fixierung der Primärstruktur (206) an dem Flügelkasten (202) gewährleistet,
- eine hintere Befestigung (100), die Folgendes umfasst:
- eine Flügelbefestigung (302), die eine Platte (304) und eine Hauptwand (306), die zu der Platte (304) senkrecht ist, umfasst, wobei die Platte (304) an der unteren Wand (204) fixiert ist,
- einen vorderen Winkel (308a) und einen hinteren Winkel (308b), wobei jeder Winkel (308a-b) eine vertikale Wand (312a-b) und eine horizontale Wand (314a-b) umfasst, wobei die vertikale Wand (312a) des vorderen Winkels (308a) an einer Vorderseite der Hauptwand (306) anliegt und die horizontale Wand (314a) des vorderen Winkels (308a) an und unter der Platte (304) anliegt, wobei die vertikale Wand (312b) des hinteren Winkels (308b) an einer Hinterseite der Hauptwand (306) anliegt und die horizontale Wand (314b) des hinteren Winkels (308b) an und unter der Platte (304) anliegt, und
- eine Anordnung (320), die eine Basis (322), einen backbordseitigen Schaft (324a) und einen steuerbordseitigen Schaft (324b), die an der Basis (322) befestigt sind, umfasst, wobei die Basis (322) an der Endwand (208) fixiert ist, wobei jede vertikale Wand (312a-b) und die Hauptwand (306) für jeden Schaft (324ab) eine Bohrung (326) aufweisen, in die sich der Schaft (324a-b) einpasst.

2. Anordnung nach Anspruch 1, **dadurch gekennzeichnet, dass** die Einpassung jedes Schafts (324a-b) in die assoziierten Bohrungen (326) mit Hilfe einer Buchse (328) erfolgt.

3. Anordnung nach einem der Ansprüche 1 oder 2, **dadurch gekennzeichnet, dass** der backbordseitige Schaft (324a) aus einem backbordseitigen Halbzylinder (328a) und einem steuerbordseitigen Halbzylinder (328b) besteht, dass der steuerbordseitige Schaft (324b) aus einem backbordseitigen Halbzylinder (328a) und einem steuerbordseitigen Halbzylinder (328b) besteht und dass die Basis (322) in drei Basisteile (330) unterteilt ist, wobei ein Basisteil (330) fest mit dem backbordseitigen Halbzylinder (328a) des backbordseitigen Schafts (324a) verbunden ist, wobei ein Basiselement (330) fest mit dem steuerbordseitigen Halbzylinder (328b) des steuerbordseitigen Schafts (324b) verbunden ist und wobei ein Basiselement (330) fest mit dem steuerbordseitigen Halbzylinder (328b) des backbordseitigen Schafts (324a) und dem backbordseitigen Halbzylinder (328a) des steuerbordseitigen Schafts (324b) verbunden ist.

4. Luftfahrzeug (10), das eine Anordnung nach einem der Ansprüche 1-3 umfasst.

## Claims

1. Assembly for an aircraft (100) and comprising:
- a mounting pylon (110) comprising a primary structure (206) with a tail wall (208),
- a wing (102) comprising a wing box (202) with a lower wall (204), and
- a front attachment for attaching the primary structure (206) to the wing box (202),
- a rear attachment (100) comprising:
- a wing attachment (302) that comprises a plate (304) and a main wall (306) that is perpendicular to the plate (304), wherein the plate (304) is attached to the lower wall (204),
- a front bracket (308a) and a rear bracket (308b), wherein each bracket (308a-b) comprises a vertical wall (312a-b) and a horizontal wall (314a-b), wherein the vertical wall (312a) of the front bracket (308a) presses against a front face of the main wall (306), and the horizontal wall (314a) of the front bracket (308a) presses against and below the plate (304), wherein the vertical wall (312b) of the rear bracket (308b) presses against a rear face of the main wall (306), and the horizontal wall (314b) of the rear bracket (308b) presses against and below the plate (304), and
- an assembly (320) comprising a pedestal (322), a port-side shaft (324a) and a starboard-side shaft (324b) that are attached to the pedestal (322), wherein the pedestal (322) is attached to the tail wall (208), wherein, for each shaft (324a-b), each vertical wall (312a-b) and the main wall (306) have a bore (326) into which said shaft (324a-b) is fitted.

2. Assembly according to Claim 1, **characterized in that** each shaft (324a-b) is fitted into the associated bores (326) by means of a swivel joint (328).

3. Assembly according to either of Claims 1 and 2, **characterized in that** the port-side shaft (324a) is made up of a port-side half-cylinder (328a) and of a starboard-side half-cylinder (328b), **in that** the starboard-side shaft (324b) is made up of a port-side half-cylinder (328a) and of a starboard-side half-cylinder (328b), and **in that** the pedestal (322) is divided into three bases (330), wherein one base (330) is secured to the port-side half-cylinder (328a) of the port-side shaft (324a), wherein one base (330) is secured to the starboard-side half-cylinder (328b) of the starboard-side shaft (324b), and wherein one base (330) is secured to the starboard-side half-cylinder (328b) of the port-side shaft (324a) and to the port-side half-cylinder (328a) of the starboard-side shaft (324b).

4. Aircraft (10) comprising an assembly according to one of Claims 1 to 3.
